# FASCICULE DE BREVET EUROPEEN

(11) **EP 4 132 701 B1**
(45) Date de publication et mention de la délivrance du brevet: **03.04.2024**
(21) Numéro de dépôt: 21722965.7
(22) Date de dépôt: 07.04.2021
(51) Int. Cl.: B01J 19/00

(54) **MICRORÉACTEURS EN SAPHIR**
SAPHIRMIKROREAKTOREN
SAPPHIRE MICROREACTORS

(30) Priorité: 07.04.2020 FR 2003453
(43) Date de publication de la demande: 15.02.2023
(73) Titulaire: Centre national de la recherche scientifique, 75016 Paris (FR); Centre National d'Etudes Spatiales, 75001 Paris (FR)
(72) Inventeur: MARRE, Samuel, 33600 PESSAC (FR); LECOUTRE, Carole, 33610 CESTAS (FR); GARRABOS, Yves, 33600 PESSAC (FR); FAUVEAU, Cyrielle, 33600 PESSAC (FR); CARIO, Anaïs, 33130 BÈGLES (FR); NGUYEN, Olivier, 33600 PESSAC (FR)
(74) Mandataire: Brevalex
(86) Numéro de dépôt international: PCT/FR2021/050604
(87) Numéro de publication internationale: WO 2021/205115

(56) Documents cités:
- US-A1- 2004 043 506
- US-A1- 2007 278 100
- US-A1- 2009 311 737

## Description

La présente invention appartient au domaine des dispositifs de microréaction et de l'ingénierie des micro-procédés. Il s'agit en particulier de dispositifs ayant des microcanaux (chambres internes de dimensions micrométriques à submicrométriques) pour conduire des mélanges et/ou des réactions chimiques ou biochimiques. Plus particulièrement, de tels dispositifs sont optimisés pour atteindre des contraintes élevées en température et en pression (*i.e.* 500°C et 500 bar). À des fins d'observations et d'analyses, les dispositifs de microréaction possèdent une large plage de transparence en termes de longueurs d'onde.

L'objet de la présente invention se rapporte à un dispositif microfluidique ou microréacteur en saphir, transparent, de préférence dans le domaine de longueurs d'onde allant de 150 à 6500 nm, à son procédé de fabrication et à son utilisation.

Un microréacteur est un dispositif microfluidique comprenant des chambres internes de dimensions micrométriques à submicrométriques contenant des microvolumes de fluide dans lesquels peut se produire une réaction chimique ou biochimique. La conception et la géométrie des canaux microfluidiques sont flexibles et permettent de réaliser à façon un réacteur optimisé afin de maximiser la réaction et obtenir, le plus efficacement, possible le produit désiré. Il existe actuellement différents types de microréacteurs selon les matériaux mis en oeuvre et les plages de température et de pression de travail considérées :
- transparents : fabriqués avec des polymères (par exemple PDMS - PolyDiMethylSiloxane, PMMA - PolyMethylMethAcrylate) ou avec du verre,
- Semi-transparents : constitués d'une partie en silicium et d'une autre en borosilicate, et
- Non-transparents : réalisés en métal ou en céramiques.

Le document US2007278100 divulgue notamment un appareil pour contrôler le débit d'un fluide traversant un trajet de micro-écoulement, comprenant une couche d'électrode, une couche d'électrolyte et une membrane polymère conductrice dans cet ordre, la membrane polymère conductrice étant exposée au trajet de micro-écoulement, et le débit étant contrôlé en fournissant un courant électrique de la couche d'électrode à la membrane polymère conductrice via la couche d'électrolyte.

Le tableau 1 ci-dessous donne des exemples de limites généralement constatées en termes de pression et température pour les microréacteurs transparents ou semi-transparents connus :

| - | **Microréacteur** | | |
|---|---|---|---|
| **Paramètres** | Polymères | Verre-verre | Silicium-borosilicate |
| Pression | < 20 bar | < 400 bar | < 400 bar |
| Température | < 100°C | < 150 °C | < 400 °C |

La présente invention se rapporte à un microréacteur dont les caractéristiques d'utilisation en pression, température et compatibilité chimique surpassent tous les autres types de microréacteur connus. En termes de température, elles dépassent les microréacteurs de type polymère, silicium-borosilicate et verre-verre. De plus, sa gamme d'analyse *in situ* couvre le domaine ultraviolet jusqu'à l'infrarouge.

Un objet de l'invention est ainsi en un microréacteur en saphir transparent, de préférence dans le domaine de longueurs d'onde allant de 150 à 6500 nm.

Un avantage du microréacteur selon l'invention est qu'il est constitué essentiellement de saphir.

Le microréacteur selon l'invention est en saphir transparent, de préférence dans le domaine de longueurs d'onde allant de 150 à 6500 nm, dans lequel le saphir est monocristallin ou polycristallin, de préférence monocristallin tel que le plan c est perpendiculaire à la surface du microréacteur.

Dans le cadre de l'invention, on entend par « microréacteur » ou « dispositif microfluidique », un dispositif sur puce confiné dont les dimensions des canaux vont généralement de 1 à 1 000 µm au sein desquels peuvent s'écouler des fluides réactifs ou non. Les nombreuses techniques de microfabrication disponibles aujourd'hui autorisent des géométries variées et complexes. Les microréacteurs sont utilisés pour des études dans le domaine de l'ingénierie des micro-procédés, en particulier en flux. Les microréacteurs offrent de nombreux avantages par rapport aux réacteurs conventionnels, tels que l'amélioration des phénomènes de transferts (chaleur, matière, ...) à petites échelles selon les matériaux utilisés.

On entend par « saphir », la forme cristalline de l'alumine (Al₂O₃), qui peut être monocristallin ou polycristallin. Le saphir synthétique possède des propriétés compatibles avec des conditions extrêmes de hautes températures, de hautes pressions et d'environnements chimiques particulièrement corrosifs. Le saphir n'est surpassé en dureté et en résistance à la rayure que par le diamant. Le saphir a un point de fusion à 2050°C et possède une excellente conductivité thermique. Sa résistance mécanique et à la corrosion, sa stabilité dimensionnelle, sa tenue sous des pressions extrêmes et sa très haute résistance à la chaleur font du saphir un matériau qui se distingue des matériaux avancés tels que les céramiques et les verres. De plus, les propriétés optiques du saphir sont exceptionnelles : il est transparent aux ondes lumineuses de longueur comprises entre 150 nm (ultraviolet) et 6500 nm (infrarouge).

Généralement, un monocristal ou matériau monocristallin est un matériau solide constitué d'un unique cristal, formé à partir d'un seul germe. A l'opposé, un polycristal ou matériau polycristallin, est constitué lui d'une multitude de petits cristaux de taille, de forme et d'orientation variées séparés par des joints de grains.

Avantageusement, selon l'invention, le saphir peut être monocristallin ou polycristallin. De préférence, le saphir est monocristallin et le plan c est perpendiculaire à la surface du microréacteur. (S. X. Jiang et al, Study on the morphology and shape control of volcano-shaped patterned sapphire substrates fabricated by imprinting and wet etching, CrystEngComm, 2015, 17, 3070-3075 et C. Chen et al, Evolution of Bottom c-Plane on Wet-Etched Patterned Sapphire Substrate, CS Journal of Solid State Science and Technology, 203, R169-R171).

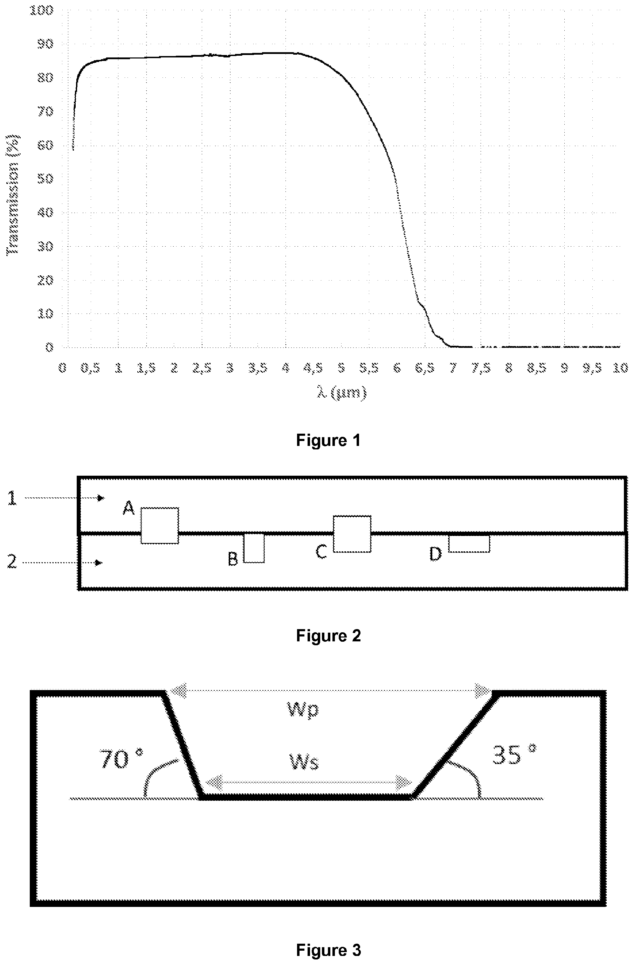

On entend par « transparent », une propriété d'un matériau ou dispositif qui se laisse traverser par la lumière pour tout ou partie. Cette propriété dépend de la longueur d'onde de la lumière, de la nature du matériau et de l'épaisseur à traverser : ainsi, le verre est transparent dans le visible, et il bloque certains rayons ultraviolets. La figure 1 représente le diagramme de transmission d'un microréacteur en saphir selon l'invention dont l'épaisseur totale (soit un assemblage de deux wafers) est de 1 mm.

On entend par « wafer » ou « galette », une tranche ou une plaque très fine de matériau utilisée comme substrat pour la microfabrication. Dans le cadre de l'invention, les wafers sont essentiellement en saphir.

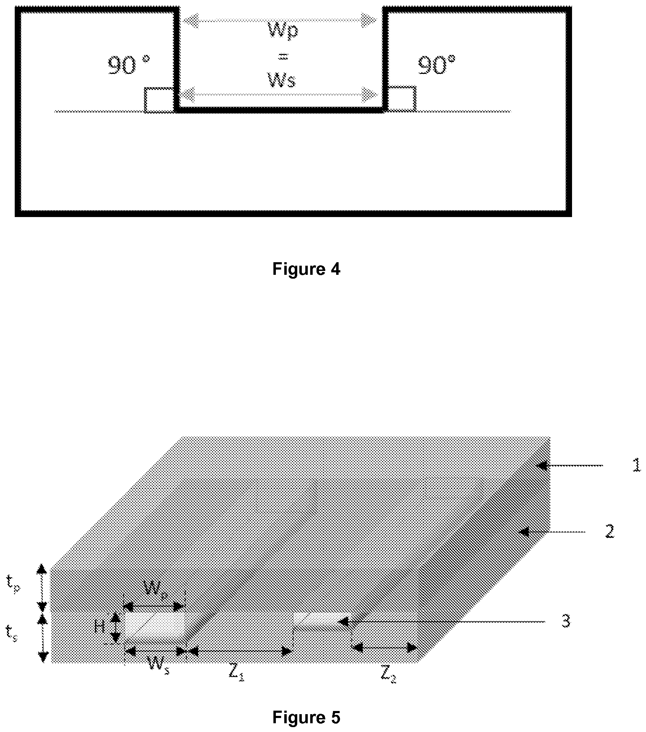

Avantageusement, le microréacteur selon l'invention peut comprendre un premier wafer, un second wafer, au moins un desdits wafers comprenant au moins un microcanal. Le microréacteur peut être un assemblage de plusieurs wafers (i.e. deux ou plus). Par exemple, la figure 5 présente un microréacteur comprenant un premier wafer (1), un second wafer (2), au moins un desdits wafers comprenant au moins un microcanal (3).

Avantageusement, le microréacteur selon l'invention ne comprend pas de couche intermédiaire (par exemple en élastomères - Nitrile, Buna-N, Viton ou Kalrez), entre les wafers, permettant ou favorisant l'assemblage des wafers. En dehors des éventuels éléments en contact avec le microréacteur tels que des pièces de compression ou des joints (externes au réacteur, connectés aux entrées et sorties du microréacteur) ou bien incorporés dans le microréacteur tels que des capteurs *in situ* (intégrés dans les microcanaux), le microréacteur selon l'invention n'est constitué que de saphir.

Généralement, un wafer en saphir peut avoir une épaisseur allant 200 à 2000 µm. Les dimensions latérales classiques d'un microréacteur sont généralement comprises entre 5 mm et plusieurs centaines de millimètres.

Avantageusement, le microréacteur selon l'invention, généralement constitué de deux wafers superposés, peut avoir une épaisseur totale allant de 400 µm à 4000 µm, de préférence de 400 µm à 1000 µm. Les dimensions du microréacteur (longueur, largeur, épaisseur), ainsi que les dimensions des microcanaux, peuvent varier en fonction de l'application visée. Par exemple, pour la synthèse de matériaux, on utilise généralement une largeur de microcanal de 200 µm.

Avantageusement, le microréacteur selon l'invention ne comprend pas de couche intermédiaire (d'un matériau autre que le saphir) entre les deux wafers superposés.

Avantageusement, le premier et le second wafer peuvent avoir une épaisseur identique ou différente. De préférence, le premier et le second wafer ont une épaisseur identique.

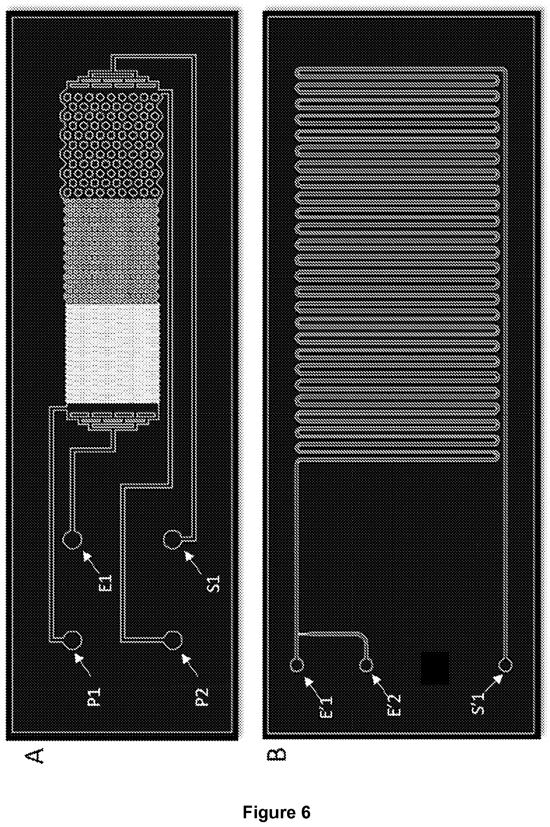

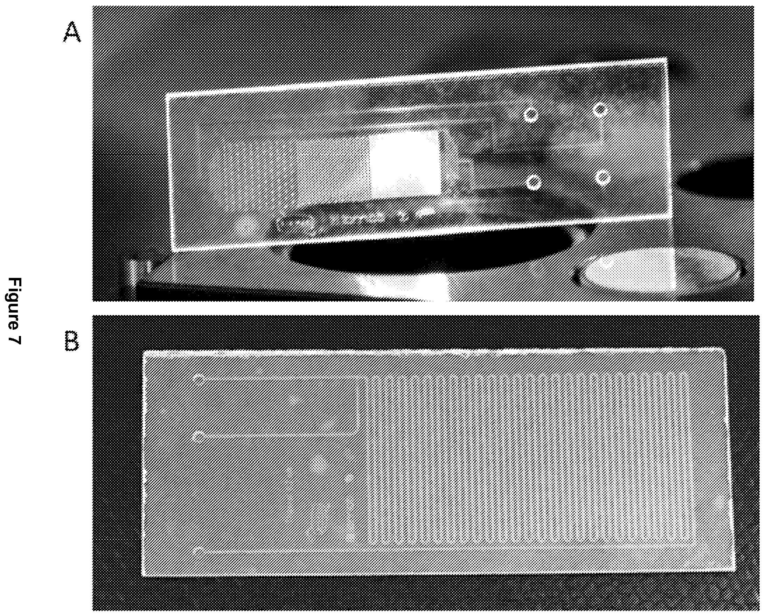

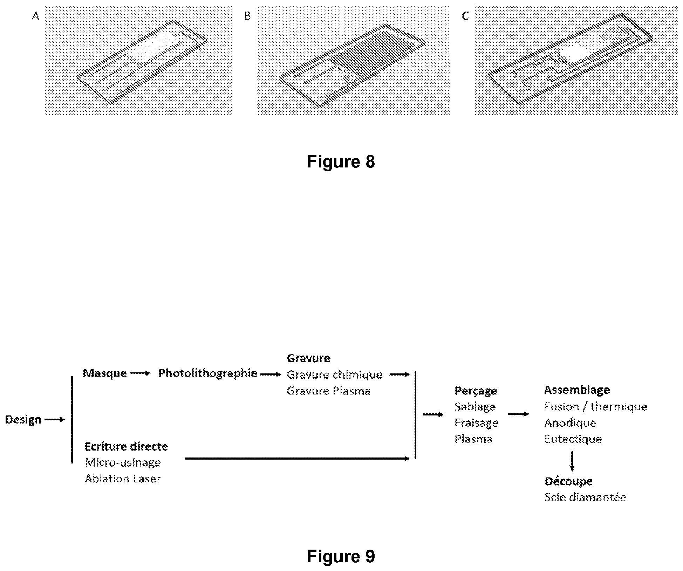

On entend par « microcanal », un canal gravé dont deux des dimensions sont micrométriques à submicrométriques. Un microcanal peut comprendre au moins une entrée et/ou au moins une sortie (appelés aussi port d'entrée ou de sortie), gravées ou percées dans au moins un wafer. Un microcanal peut avoir une longueur et une forme variable. Un microcanal peut comprendre un ou plusieurs motifs. Un microcanal peut par exemple comprendre une ou plusieurs sections rectilignes et/ou comprendre un ou plusieurs motifs en boustrophédon, en entonnoir, en zigzag ou peut comprendre des micro-plots et des milieux poreux. Un microcanal peut être ramifié ou non ramifié. Un microcanal peut comprendre une ou plusieurs ramifications, par exemple lorsqu'il comprend plusieurs entrée et/ou plusieurs sorties. Un microcanal est continu. Les figures 6, 7 et 8 montrent des exemples de motifs de microcanaux.

Avantageusement, le premier et/ou le second wafer peuvent comprendre au moins un microcanal. Un microcanal peut être gravé dans au moins un wafer. Un microcanal peut être gravé dans un wafer ou dans une pluralité de wafers, de préférence gravé dans un ou deux wafers. Par exemple, le microcanal est formé par gravure dans un premier wafer, puis par recouvrement par le second wafer lors de l'assemblage du microréacteur. Lorsque le microcanal est gravé dans deux wafers, le microcanal est formé par gravure dans chacun des premier et second wafers, puis les deux parties supérieure et inférieure du microcanal sont réunies en vis-à-vis lors de l'assemblage du microréacteur. La figure 2 présente une vue en coupe de différents types de microcanaux : les microcanaux (A) et (C) sont gravés dans deux wafers ; les microcanaux (B) et (D) sont gravés dans un seul wafer.

Avantageusement, le au moins un microcanal peut avoir une profondeur moyenne allant de 0,1 à 500 µm, de préférence de 10 à 100 µm. La profondeur d'un microcanal peut être variable ou constante sur toute la longueur du microcanal. De préférence, la profondeur d'un microcanal est constante sur toute la longueur du microcanal. On définit une profondeur de microcanal H. Lorsqu'un microcanal est gravé dans deux wafers, la profondeur H peut être identique ou différente dans les deux wafers. Par exemple, la figure 2 montre un microcanal (A) gravé avec une profondeur supérieure dans le wafer (1) que dans le wafer (2). La figure 2 montre un microcanal (C) gravé avec une profondeur identique dans les deux wafers.

Avantageusement, le au moins un microcanal peut avoir une largeur allant de 0,1 à 2000 µm, de préférence de 100 à 400 µm. La largeur du microcanal peut être variable ou constante sur toute la longueur du microcanal. De préférence, la largeur d'un microcanal est constante sur toute la longueur du microcanal. On définit une largeur de microcanal W. Un microcanal peut avoir une largeur supérieure Wp et inférieure Ws entre la partie supérieure et inférieure de la gravure. Les largeurs Wp et Ws peuvent être identiques comme sur la figure 4 (par exemple dans le cadre d'une gravure plasma) ou différentes comme sur la figure 3 (par exemple dans le cadre d'une gravure chimique).

On définit un ratio épaisseur du wafer / profondeur du microcanal. Avantageusement, le ratio épaisseur du wafer / profondeur du microcanal peut être supérieur ou égal à 2, de préférence supérieur ou égal à 4.

Avantageusement, le microréacteur selon l'invention est configuré de sorte que la surface totale développée par l'ensemble du ou des microcanaux, est généralement inférieure ou égale à la moitié de la surface totale du wafer. Pour éviter la rupture mécanique du matériau, la distance minimum entre deux microcanaux, ou entre deux parties d'un même microcanal (par exemple lorsque ledit microcanal serpente) peut être supérieure ou égale à largeur dudit microcanal. De même, la distance minimum entre un microcanal et l'extrémité d'un wafer peut être supérieure ou égale à la largeur dudit microcanal.

Avantageusement, le microréacteur selon l'invention peut comprendre un wafer (1) d'épaisseur tₚ et un wafer (2) d'épaisseur tₛ, ledit wafer (2) comprenant au moins un microcanal (3). Le microcanal (3) peut être caractérisé par une profondeur H et une largeur W.

Avantageusement, la distance minimum Z₁ entre deux microcanaux (3) peut être supérieure à W, de préférence supérieure à 2*W. De préférence, si Wₚ ≠ Wₛ, la distance Z₁ est supérieure à la plus grande des deux : si Wₚ > Wₛ alors Z₁ > Wₚ, de préférence Z₁ > 2*Wₚ ; si Wₛ > Wₚ alors Z₁ > Wₛ, de préférence Z₁ > 2*Wₛ.

Avantageusement, la distance minimum Z₂ entre un microcanal (3) et l'extrémité d'un wafer peut être supérieure à W, de préférence supérieure à 2*W. De préférence, si Wₚ ≠ Wₛ, la distance Z₂ est supérieure à la plus grande des deux : si Wₚ > Wₛ alors Z₂ > Wₚ, de préférence Z₂ > 2*Wₚ ; si Wₛ > Wₚ alors Z₂ > Wₛ, de préférence Z₂ > 2*Wₛ.

Avantageusement, le microréacteur selon l'invention peut avoir un volume inférieur à 500 µl, de préférence allant de 0,5 à 500 µl. On entend par volume du microréacteur, le volume total constitué par l'ensemble des microcanaux compris dans le microréacteur. Le volume du microréacteur peut varier en fonction de l'application visée. Par exemple, le microréacteur peut avoir un volume allant de 10 à 500 µl lorsque celui-ci est destiné à être utilisé en synthèse chimique ou de matériaux. Par exemple, le microréacteur peut avoir un volume allant de 0,5 à 10 µl lorsque celui-ci est destiné à être utilisé en thermo-hydrogéologie. Par exemple, le microréacteur peut avoir un volume allant de 0,5 à 500 µl lorsque celui-ci est destiné à être utilisé en microbiologie en conditions extrêmes.

L'invention se rapporte également à l'utilisation de saphir pour la fabrication d'un microréacteur.

L'invention se rapporte aussi à un procédé de fabrication d'un microréacteur en saphir selon l'invention comprenant les étapes :
1) gravure d'au moins un microcanal sur au moins un wafer,
2) assemblage du wafer gravé obtenu à l'étape 1) sur un second wafer gravé ou non gravé.

Avantageusement, l'étape 1) de gravure du microcanal peut être mise en oeuvre par toute technique connue de l'homme du métier.

Avantageusement, l'étape 1) du procédé selon l'invention peut être réalisée par une méthode de photolithographie suivie de gravure (chimique ou plasma).

Avantageusement, l'étape 1) du procédé selon l'invention peut être réalisée par une méthode d'écriture directe, laser ou usinage.

Avantageusement, l'étape 1) du procédé selon l'invention peut comprendre les sous étapes suivantes :
a) impression d'une image d'intérêt, au moyen d'une résine, sur au moins un wafer, ledit wafer étant recouvert par une couche de matériau sacrificiel,
b) gravure chimique de la couche de matériau sacrificiel,
c) élimination de la couche de résine résiduelle,
d) gravure chimique des microcanaux.

Avantageusement, l'étape a) d'impression du procédé selon l'invention peut comprendre les étapes de :
- recouvrement de la surface du wafer et de la couche de matériau sacrificiel, comprenant l'utilisation d'une résine,
- cuisson de la résine,
- pose d'un masque comprenant une image d'intérêt sur la résine,
- insolation des zones non protégées par le masque par irradiation UV,
- révélation de l'image d'intérêt par élimination des zones insolées.

On entend par « couche de matériau sacrificiel », une couche mince déposée sur la surface du wafer en saphir, qui sert de protection et de masquage durant l'étape de gravure. Avantageusement, celle-ci est constituée d'une couche d'oxyde de silicium d'une épaisseur allant de 300 à 500 nm.

Avantageusement, l'étape b) de gravure chimique du procédé selon l'invention peut comprendre une gravure au moyen d'une solution permettant l'élimination de la couche sacrificielle présente sur le wafer.

Avantageusement, l'étape c) d'élimination de la couche de résine résiduelle peut se faire au moyen d'un solvant (e.g. acétone).

Avantageusement, l'étape d) de gravure chimique du procédé selon l'invention peut comprendre une gravure du wafer avec une solution d'acide sulfurique et phosphorique (ratio allant de 3/1 à 4/1 volumique).

Avantageusement, le procédé selon l'invention peut comprendre en outre une étape d'élimination de la couche sacrificielle résiduelle, par gravure chimique (*e*.*g*. utilisation d'une solution d'acide fluorhydrique).

Avantageusement, le procédé selon l'invention peut comprendre en outre une étape de perçage des ports d'entrée et/ou de sortie du ou des wafers.

Avantageusement, l'assemblage de l'étape 2) du procédé selon l'invention peut comprendre une étape de précollage. L'étape de précollage peut comprendre au moins une étape de nettoyage des wafers suivi d'un précollage en solution aqueuse puis d'un traitement thermique dans un système sous presse (et de préférence sous vide primaire, c'est-à-dire de 10 à 100 mbar). Le nettoyage peut être réalisé par exemple avec une solution d'acide sulfurique (H₂SO₄) et de peroxyde d'hydrogène (H₂O₂), (4 :1, v/v), suivi d'un rinçage (par exemple dans de l'eau ultra pure à une température supérieure ou égale à 60°C et d'un traitement dans un cristallisoir d'acide phosphorique à une température supérieure ou égale à 150°C. Le précollage des wafers peut être ensuite réalisé dans un cristallisoir.

Avantageusement, le précollage des wafers peut consister en la mise en contact des wafers l'un contre l'autre, la ou les faces gravées côté intérieur, l'ensemble ainsi constitué subissant ensuite un traitement thermique à une température allant de 200 à 300 °C et pendant une durée allant de 2 à 4 heures dans un système sous presse (serrage de vis), de préférence sous vide primaire (c'est-à-dire de 10 à 100 mbar).

Avantageusement, le précollage des wafers est réalisé en salle blanche. Les wafers sont mis-en-contact dans une enceinte, compressés *via* une presse (entre 2 et 20 bar de pression), mis en température (de 200 à 300 °C) puis, de préférence mis sous vide primaire (10-100 mbar) pendant la durée du pré-collage, à l'aide d'une pompe à vide.

Avantageusement, l'étape 2) d'assemblage du procédé selon l'invention peut être réalisée par toutes méthodes connues. Il peut en particulier être réalisé par Spark Plasma Sintering (SPS), aussi appelé Field Activated Sintering Technique (FAST).

L'invention se rapporte encore à l'utilisation d'un microréacteur selon l'invention pour la mise-en-oeuvre de fluides à haute pression et/ou hautes températures, de fluides chimiquement agressifs (acides, super acides, bases ou tout fluide corrosif) et de fluides supercritiques dans les domaines de la chimie de synthèse, la thermo-hydrogéologie, la géochimie, la microbiologie en conditions extrêmes (T < 1000°C, p < 2000 bar), de préférence à des températures inférieures ou égales à 500°C et/ou des pressions inférieures ou égales à 500 bar.

La figure 1 représente le diagramme de transmission d'un microréacteur en saphir selon l'invention dont l'épaisseur totale est de 1 mm (transmission en % en fonction de la longueur d'onde λ en µm).

La figure 2 représente une vue en coupe de microcanaux gravés dans deux wafers (A et C) et de microcanaux gravés dans un seul wafer (B et D).

La figure 3 représente une vue en coupe d'un wafer comprenant un microcanal gravé chimiquement.

La figure 4 représente une vue en coupe d'un wafer comprenant un microcanal gravé par plasma.

La figure 5 représente une vue en coupe d'un microréacteur selon l'invention comprenant un premier wafer (1), un second wafer (2) et un microcanal (3).

La figure 6 représente deux exemples de motifs (A) et (B). Le motif (A) représente un microréacteur de type « milieu poreux » composé de micro-plots avec différents diamètres. Le motif (A) possède une entrée E1 et une sortie S 1 ainsi que deux ports P1 et P2 permettant de relever la pression en amont et en aval des micro-plots. Le motif (B) représente un microréacteur de type « flux segmenté » composé de deux entrées E' 1 et E'2 et d'une sortie S' 1. Les deux microcanaux reliés aux entrées E' 1 et E'2 se rejoignent pour n'en former qu'un qui continue afin d'avoir une certaine longueur de canal jusqu'à la sortie S' 1.

La figure 7 représente (A) le microréacteur C obtenu à l'exemple 1 avec le motif A de la figure 4 de type milieu poreux et (B) un microréacteur avec le motif B de la figure 4 de type flux segmenté (alternances de fluides).

La figure 8 représente en modélisation 3D, deux motifs (A et C) de microréacteur de type milieu poreux avec (A) un milieu poreux uniforme (diamètre identique des micro-plots) et (C) un milieu poreux composé de micro-plots ayant trois diamètres différents. La figure 8 représente en modélisation 3D un motif (B) de flux segmenté.

La figure 9 représente de manière schématique, les principales étapes de la fabrication d'un microréacteur selon l'invention.

La figure 10 représente le dispositif mis en place pour la gravure chimique.

La figure 11 représente un système d'injection, aussi appelé pièce de compression, qui permet de connecter les entrées et sorties du microréacteur à des réactifs. Ce système d'injection permet de maintenir le microréacteur sous pression.

La figure 12 représente une photographie prise par microscopie optique (objectif x40) de l'intérieur d'un microréacteur tout saphir sous pression lors d'une réaction entre de l'eau, des particules de fer et un gaz.

La figure 13 représente en (A) l'image obtenue par microscopie optique (objectif x15) lors d'une analyse *in situ* par spectroscopie infrarouge d'un microréacteur rempli d'un mélange eau/pentane/air ; en (B) le spectre d'absorption du microréacteur tout saphir utilisé comme background pour les analyses *in situ* ; en (C) et (D) respectivement les spectres d'absorption du pentane et de l'eau obtenus par spectroscopie infrarouge sur le microréacteur.

La figure 14 représente un masque réalisé sur le logiciel AUTOCAD (marque déposée) contenant l'image d'intérêt ou design à graver dans le wafer.

La figure 15 représente les paramètres utilisés lors de l'étape d'assemblage par « Spark Plasma Sintering », spécifiquement les rampes de température et de pression appliquées en fonction du temps.

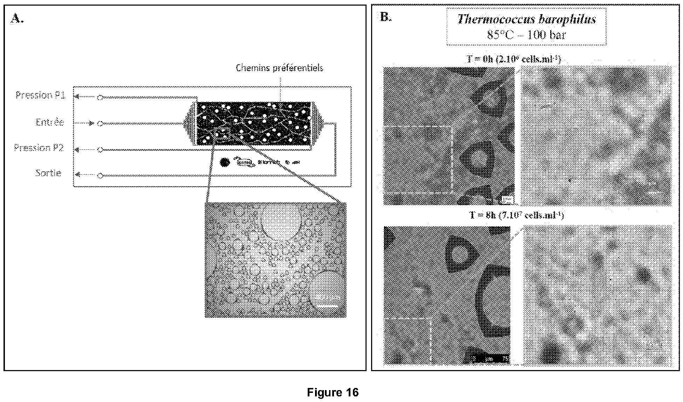

La figure 16 représente : (A) un motif de microréacteur en saphir qui possède une entrée et une sortie ainsi que deux ports P1 et P2 permettant de relever la pression en amont et en aval des micro-plots, ledit motif simulant un milieu poreux hétérogène avec des plots de différentes tailles (25 à 300 µm) ainsi que des zones de passage préférentiels simulant des fissures. (B) des images en lumière visible à différents temps de croissance (0 et 8h) de micro-organismes de la souche *Thermococcus Barophilus* qui ont été cultivés en pression (100 bar) / température (85°C) dans un microréacteur ayant le design de la Figure 16-A. Il est possible de suivre l'évolution du développement microbien en temps réel.

L'invention sera mieux comprise à la lecture des exemples, non limitatifs, qui suivent.

### Exemple 1 : Fabrication d'un microréacteur en saphir selon l'invention

### 1) Gravure.

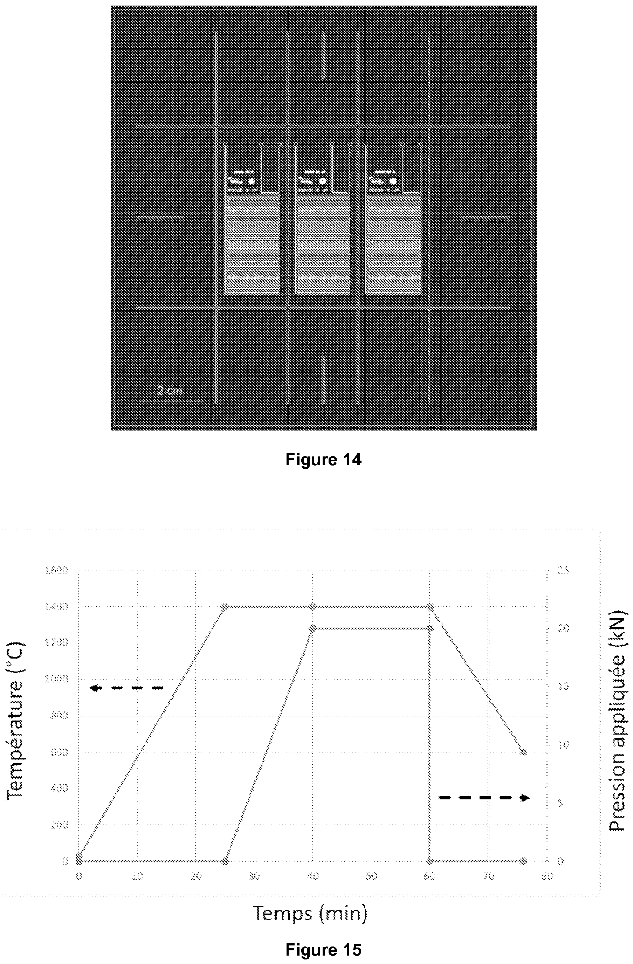

Le motif d'un microcanal (dessiné au préalable sur un masque *via* le logiciel AUTOCAD (marque déposée), voir figure 14) est imprimé sur le wafer en saphir par le procédé de photolithographie.

Cette étape se déroule de préférence en salle blanche (salle propre selon la norme ISO 14644-1). Un wafer de dimension 101,6 mm de diamètre (tranche ou galette) en saphir, recouvert d'une couche d'oxyde SiO₂ de 500 nm, est nettoyé avec de l'isopropanol et de l'éthanol puis séché à l'aide d'un tissu en microfibre, afin de supprimer toutes les poussières/traces de la surface. Le procédé de lithographie commence par l'application uniforme d'un film de quelques µm d'épaisseur de résine photosensible (avantageusement : 4 µm), sur le substrat *via* l'utilisation d'un dispositif de revêtement par centrifugation. Une étape de cuisson sur plaque chauffante succède au dépôt de résine (la température et la durée sont à adapter selon la résine, dans cet exemple la cuisson a été de 5 minutes à 115°C). Une fois le wafer refroidi à température ambiante, la résine est exposée pendant 45 secondes à des rayons ultra-violet dans un aligneur exposeur (par exemple de type UV-KUB KLOE). Lors de la mise en place du wafer dans cet appareil, un masque est placé par-dessus de manière à ce que les motifs du masque soient formés positivement sur la résine.

Le wafer est ensuite plongé dans un bain de développeur chimique comprenant une solution diluée de tétraméthylammonium hydroxyde qui élimine les zones insolées. Ces zones ne sont plus protégées par la résine et seront donc sensibles à la gravure. Pour arrêter le développement de la résine, le wafer est ensuite rincé à l'eau et séché avant d'être chauffé quelques minutes sur une plaque chauffante (environ 6 minutes à 115°C).

La couche d'oxyde, exposée après irradiation de la résine, est éliminée par attaque acide. Le wafer est placé, face à graver vers le haut, dans un cristallisoir en téflon et la zone à graver est recouverte d'une solution d'acide fluorhydrique (HF) tamponnée à 1 % dans l'eau, pendant 7 minutes. Une fois l'attaque chimique terminée, le wafer est rincé à l'eau et l'empreinte du dessin final apparait. La couche de résine résiduelle est enlevée en nettoyant le wafer à l'acétone.

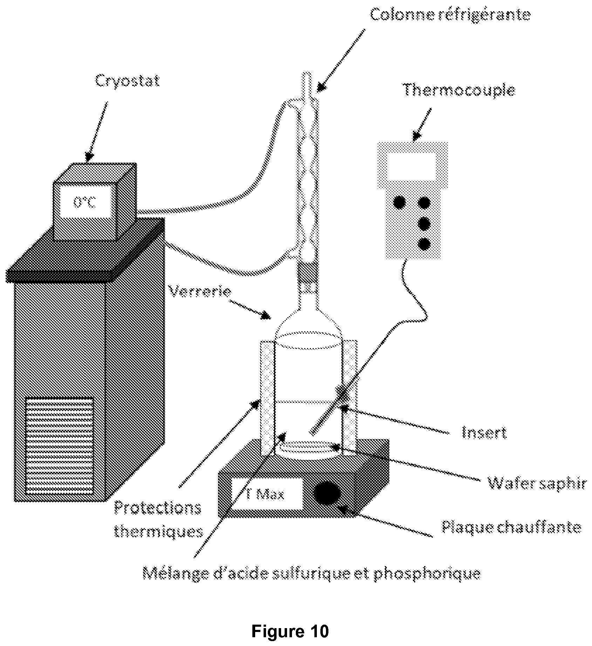

Une fois que la couche d'oxyde a été éliminée, le saphir est gravé. La gravure se fait avec de l'acide sulfurique (H₂SO₄) et phosphorique (H₃PO₄) dans les proportions 4 pour 1 (v/v), suivant le montage présenté en Figure 10. La température du mélange se stabilise entre 250 et 300°C. Après plusieurs minutes à la température maximum, le wafer est gravé pour former le motif du microcanal souhaité. La gravure du wafer étant anisotrope, le profil de gravure se fait selon le plan c du saphir, creusant des angles asymétriques θ= 35 ° et 70° par rapport à la surface. Une fois gravé, le wafer est rincé à l'eau et à l'éthanol.

Les ports d'entrée et de sortie du wafer sont percés par exemple à l'aide d'un laser ou par l'usage de trépans diamantés. Un dernier bain d'HF (7 min) est effectué afin d'enlever la couche d'oxyde résiduelle.

### On obtient le wafer A.

### 2) Assemblage.

L'étape de pré-collage des wafers est réalisée en condition de propreté (salle blanche) afin d'éviter à toute poussière ou impureté de se placer entre les deux wafers et compromettre l'assemblage. Les deux wafers, le wafer A et un wafer B (de préférence de dimensions latérales identiques au wafer A) sont nettoyés avec une solution de Piranha (acide sulfurique (H₂SO₄) et peroxyde d'hydrogène (H₂O₂, 4 :1 v/v) pendant 15 min. Ensuite les deux wafers sont placés pendant 5 min dans de l'eau ultra pure chauffée à 60°C puis transférés dans un cristallisoir d'acide phosphorique chauffé à 150°C. Après 30 minutes, les deux wafers sont déposés dans une solution diluée d'acide sulfurique ayant un pH de 1 pendant 5 min. Les wafers sont ensuite posés dans un cristallisoir contenant de l'eau ultra pure durant 5 minutes.

Les deux wafers sont ensuite assemblés l'un contre l'autre, la ou les faces gravées côté intérieur. L'ensemble ainsi constitué subit ensuite un traitement thermique à 200°C pendant 2 h dans un système sous presse (serrage de vis).

L'assemblage des wafers s'effectue par technique de Spark Plasma Sintering (SPS), aussi appelé Field Activated Sintering Technique (FAST). Les paramètres sont représentés sur la figure 15, qui spécifie en particulier les rampes de température et de pression appliquées en fonction du temps pour assurer un bon assemblage.

Une fois que les deux wafers sont collés, le microréacteur est découpé par une scie diamantée pour obtenir le microréacteur C, en fonction des dimensions du motif et de l'application envisagée pour l'épaisseur.

### Exemple 2 : Exemple d'utilisation du microréacteur C de l'Exemple 1 en conditions sévères, test en pression et température et analyse in situ

Le microréacteur de l'exemple 1 est utilisé pour la microbiologie en conditions extrêmes.

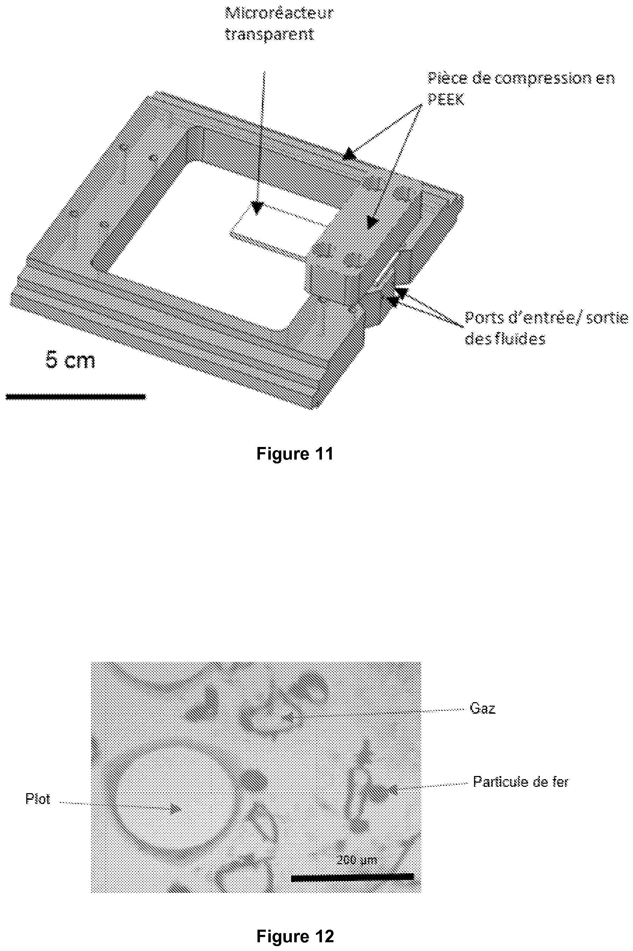

On connecte le microréacteur C de l'exemple 1 à un système d'injection de fluides adapté pour des conditions de haute pression et de haute température. La Figure 11 représente le dessin en trois dimensions de la pièce de compression en PEEK (polyetheretherketone) développée pour ces microréacteurs.

Test en pression et à température amiante du microréacteur C.

Pour tester le microréacteur C en pression, il est fixé à la pièce de compression puis relié à une pompe ISCO Teledyne remplie d'eau. Le microréacteur C a une tenue sous pression de 400 bar dans les conditions relatives à l'exemple.

Test en température et à pression atmosphérique du microréacteur C.

Pour tester le microréacteur C en température, il subit un gradient de température local : 400 °C à une extrémité et 11.3°C à l'autre. Après plusieurs heures soumis à ce gradient de température, le microréacteur est resté intact (pas de fissure, casse ou autre changement).

On démontre ainsi que le microréacteur selon l'invention peut supporter les conditions sévères selon l'exemple des tests en température et sous pression décrit ci-dessus.

Analyse *in situ* dans le microréacteur C.

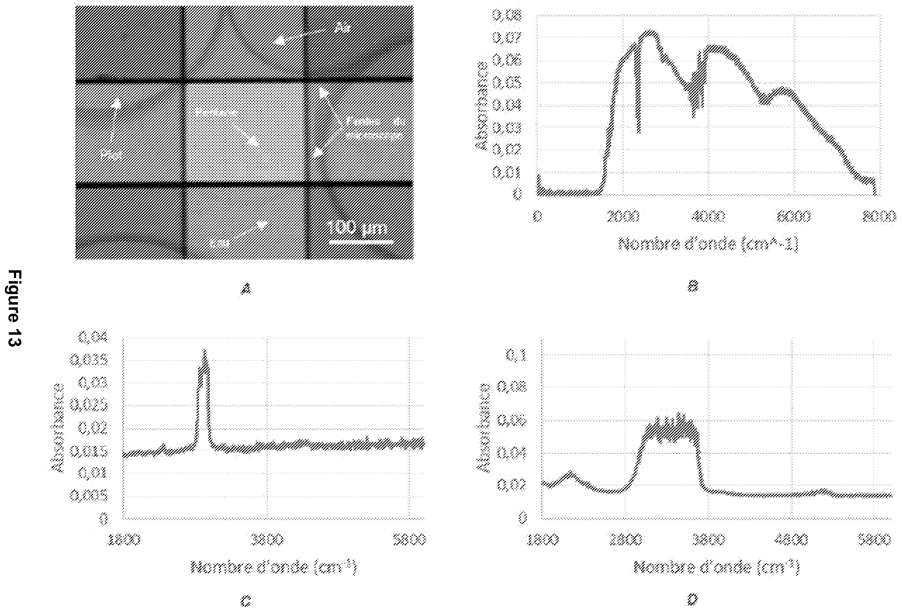

Le microréacteur C est transparent sur une gamme de longueur d'onde très large : de l'infrarouge à l'ultraviolet. La Figure 1 représente un spectre de transmission d'un microréacteur en saphir en fonction de la longueur d'onde. Cette caractéristique permet de réaliser des observations ou des analyses (Figure 13) avec par exemple un microscope optique ou un spectromètre infrarouge.

### Analyse par microscopie optique.

Par microscopie optique, il est possible d'observer en temps réel des réactions qui se produisent à l'intérieur des microréacteurs.

### Analyse par spectroscopie infrarouge.

Une analyse *in situ* d'un microréacteur C a été réalisée grâce à un spectromètre infrarouge équipé d'un microscope (voir Figure 13A). On commence par réaliser le spectre d'absorption du saphir (visible sur la Figure 13B). Ce spectre a été utilisé comme background pour effectuer des analyses. Ensuite, nous avons injecté dans le microréacteur un mélange eau-pentane. Les spectres d'absorption de ces deux molécules sont présentés sur les Figures 13C et 13D.

Ces essais et analyses montrent qu'il est possible de suivre en temps réel une réaction réalisée dans un microréacteur tout saphir sous pression et en température *via* des techniques d'analyse *in situ.* Par exemple, la figure 12 montre une image obtenue par microscopie optique de l'intérieur d'un microréacteur (motif avec des micro-plots) abritant une réaction entre de l'eau, du CO_{2(g)} et des particules de Fer. L'un des produits de cette réaction (FeCO₃) est identifiable par spectroscopie infrarouge.

### Exemple 3 : Exemple d'utilisation d'un microréacteur en saphir pour le suivi de la croissance de souches microbiennes extrémophiles in situ et en temps réel

Un microréacteur en saphir a fabriqué selon l'exemple 1 avec le motif exposé en Figure 16-A.

Le microréacteur a été utilisé pour l'étude et la culture de micro-organismes vivants en conditions extrêmes, en particulier des micro-organismes issus d'environnements profonds océaniques (*i.e. Thermococcus barophilus*)*.*

Il a été ainsi possible d'effectuer un suivi de croissance microbienne *in situ* et en temps réel pour les pressions allant jusqu'à 400 bar et des températures ≤ 100°C. Le motif du microréacteur utilisé pour cette étude est présenté sur la figure 16-A.

Le microréacteur est rempli d'un milieu de culture inoculé avec la souche à étudier. Ce dernier est ensuite pressurisé et placé dans les conditions de température permettant le développement des micro-organismes à l'aide d'un élément chauffant en contact direct sur le microréacteur. Le microréacteur est placé sous un microscope confocal pour réaliser de l'imagerie *in situ* et en temps réel afin de suivre la croissance des micro-organismes.

On peut distinguer sur la Figure 16-B des images en lumière visible à différents temps de croissance (0 et 8h) de micro-organismes de la souche *Thermococcus Barophilus* qui ont été cultivés en pression (100 bar) / température (85°C) sur un microréacteur ayant le design de la Figure 16-A. Il est ainsi possible de suivre l'évolution du développement microbien en temps réel.

## Revendications

1. Microréacteur constitué essentiellement de saphir, en saphir transparent, de préférence dans le domaine de longueurs d'onde allant de 150 à 6500 nm, dans lequel le saphir est monocristallin ou polycristallin, de préférence monocristallin tel que le plan c est perpendiculaire à la surface du microréacteur.

2. Microréacteur selon la revendication 1, comprenant un premier wafer (1), un second wafer (2), au moins un desdits wafers comprenant au moins un microcanal (3).

3. Microréacteur selon la revendication 1 ou 2, dans lequel le microcanal (3) a une profondeur moyenne H allant de 0,1 à 500 µm.

4. Microréacteur selon la revendication 3, dans lequel le microcanal (3) a une largeur moyenne W allant de 0,1 à 1000 µm.

5. Microréacteur selon l'une quelconque des revendications 2 à 4, dans lequel le ratio épaisseur du wafer (2) / profondeur du microcanal (3) est supérieur ou égal à 2, de préférence supérieur ou égal à 4.

6. Microréacteur selon la revendication 4 ou 5, dans lequel la surface totale du au moins un microcanal, est inférieure ou égale à la moitié de la surface totale du wafer, et de préférence la distance minimum Z entre deux microcanaux, ou entre deux parties d'un même microcanal est supérieure ou égale à W et est de préférence supérieure à 2*W.

7. Microréacteur selon l'une quelconque des revendications précédentes, ayant un volume inférieur à 500 µl, de préférence allant de 0,5 à 500 µl.

8. Utilisation de saphir pour la fabrication d'un microréacteur selon l'une quelconque des revendications précédentes, dans lequel le saphir est monocristallin ou polycristallin.

9. Procédé de fabrication d'un microréacteur en saphir selon l'une quelconque des revendications 1 à 7 comprenant les étapes :
1) gravure d'au moins un microcanal sur au moins un wafer, de préférence par méthode de photolithographie suivie de gravure chimique ou plasma, ou par méthode d'écriture directe laser ou usinage,
2) assemblage du wafer gravé obtenu à l'étape 1) sur un second wafer gravé ou non gravé.

10. Procédé selon la revendication précédente, dans lequel l'étape de gravure 1) comprend les sous-étapes :
a) impression d'une image d'intérêt, au moyen d'une résine, sur au moins un wafer, ledit wafer étant recouvert par une couche de matériau sacrificiel,
b) gravure chimique de la couche de matériau sacrificiel présente sur le wafer,
c) élimination de la couche de résine résiduelle,
d) gravure chimique des microcanaux selon la profondeur finale désirée.

11. Procédé selon l'une quelconque des revendications 9 à 10, comprenant en outre une étape de perçage des ports d'entrée et/ou de sortie du ou des wafers.

12. Procédé selon l'une quelconque des revendications 9 à 11, dans lequel l'assemblage de l'étape 2) comprend une étape de précollage, ladite étape de précollage comprenant de préférence au moins une étape de nettoyage des wafers suivi d'un précollage en solution aqueuse puis d'un traitement thermique dans un système sous presse et de préférence sous vide primaire.

13. Procédé selon la revendication précédente, dans lequel le nettoyage est réalisé au moyen d'une solution d'acide sulfurique (H₂SO₄) et de peroxyde d'hydrogène (H₂O₂), (4 :1, v/v), de préférence suivi d'un rinçage à l'eau ultra pure à une température supérieure ou égale à 60°C et d'un traitement dans un cristallisoir d'acide phosphorique à une température supérieure ou égale à 150°C.

14. Procédé selon la revendication 12 ou 13, dans lequel le précollage consiste en la mise en contact des wafers l'un contre l'autre, la ou les faces gravées côté intérieur, l'ensemble ainsi constitué subissant ensuite un traitement thermique à une température allant de 200 à 300 °C et pendant une durée allant de 2 à 4 heures dans un système sous presse et de préférence sous vide primaire.

15. Procédé selon l'une quelconque des revendications 9 à 14, dans lequel l'assemblage de l'étape 2) est réalisée par la méthode Spark Plasma Sintering (SPS) ou Field Activated Sintering Technique (FAST).

16. Utilisation d'un microréacteur selon l'une quelconque des revendications 1 à 7 pour la mise-en-oeuvre de fluides à haute pression et/ou hautes températures, de fluides chimiquement agressifs, de fluides supercritiques dans le domaine de la chimie de synthèse, de la thermo-hydrogéologie, de la géochimie, de la microbiologie en conditions extrêmes, de préférence à des températures inférieures ou égales à 500°C et/ou des pressions inférieures ou égales à 500 bar.

## Patentansprüche

1. Mikroreaktor, der im Wesentlichen aus Saphir, aus transparentem Saphir, bevorzugt im Wellenlängenbereich von 150 bis 6500 nm, besteht, wobei der Saphir monokristallin oder polykristallin, bevorzugt monokristallin ist, derart, dass die Ebene c zur Oberfläche des Mikroreaktors senkrecht ist.

2. Mikroreaktor nach Anspruch 1, der einen ersten Wafer (1), einen zweiten Wafer (2) umfasst, wobei mindestens einer der Wafer mindestens einen Mikrokanal (3) umfasst.

3. Mikroreaktor nach Anspruch 1 oder 2, wobei der Mikrokanal (3) eine durchschnittliche Tiefe H von 0,1 bis 500 µm aufweist.

4. Mikroreaktor nach Anspruch 3, wobei der Mikrokanal (3) eine durchschnittliche Breite W von 0,1 bis 1000 µm aufweist.

5. Mikroreaktor nach einem der Ansprüche 2 bis 4, wobei das Verhältnis Dicke des Wafers (2) / Tiefe des Mikrokanals (3) größer oder gleich 2, bevorzugt größer oder gleich 4, ist.

6. Mikroreaktor nach Anspruch 4 oder 5, wobei die Gesamtfläche des mindestens einen Mikrokanals kleiner oder gleich der Hälfte der Gesamtfläche des Wafers ist, und bevorzugt der minimale Abstand Z zwischen zwei Mikrokanälen oder zwischen zwei Teilen desselben Mikrokanals größer oder gleich W ist und bevorzugt größer als 2*W ist.

7. Mikroreaktor nach einem der vorstehenden Ansprüche, der ein Volumen von kleiner als 500 µl, bevorzugt von 0,5 bis 500 µl, aufweist.

8. Verwendung von Saphir zur Herstellung eines Mikroreaktors nach einem der vorstehenden Ansprüche, wobei der Saphir monokristallin oder polykristallin ist.

9. Verfahren zur Herstellung eines Mikroreaktors aus Saphir nach einem der Ansprüche 1 bis 7, das die folgenden Schritte umfasst:
1) Ätzen mindestens eines Mikrokanals auf mindestens einem Wafer, bevorzugt durch Fotolithographieverfahren, gefolgt von chemischem oder Plasma-Ätzen, oder durch direktes Laser-Schreibverfahren oder Bearbeitung,
2) Anbringen des in Schritt 1) erhaltenen geätzten Wafers auf einem geätzten oder ungeätzten zweiten Wafer.

10. Verfahren nach dem vorstehenden Anspruch, wobei der Schritt des Ätzens 1) die folgenden Teilschritte umfasst:
a) Drucken eines Bildes von Interesse mittels eines Harzes auf mindestens einen Wafer, wobei der Wafer mit einer Opfermaterialschicht bedeckt ist,
b) chemisches Ätzen der auf dem Wafer vorhandenen Opfermaterialschicht,
c) Entfernen der restlichen Harzschicht,
d) chemisches Ätzen der Mikrokanäle gemäß der gewünschten Endtiefe.

11. Verfahren nach einem der Ansprüche 9 bis 10, das weiter einen Schritt des Bohrens der Eingangs- und/oder Ausgangsanschlüsse des Wafers oder der Wafer umfasst.

12. Verfahren nach einem der Ansprüche 9 bis 11, wobei das Anbringen aus Schritt 2) einen Schritt des Vorverklebens umfasst, wobei der Schritt des Vorverklebens bevorzugt mindestens einen Schritt des Reinigens der Wafer, gefolgt von einem Vorverkleben in wässriger Lösung und anschließend einer Wärmebehandlung in einem System unter Presse und bevorzugt unter Primärvakuum umfasst.

13. Verfahren nach dem vorstehenden Anspruch, wobei das Reinigen mittels einer Lösung aus Schwefelsäure (H₂SO₄) und Wasserstoffperoxid (H₂O₂), (4:1, v/v), bevorzugt gefolgt von einem Spülen mit Reinstwasser bei einer Temperatur von größer oder gleich 60 °C und einer Behandlung in einem Phosphorsäurekristallisator bei einer Temperatur von größer oder gleich 150 °C ausgeführt wird.

14. Verfahren nach Anspruch 12 oder 13, wobei das Vorverkleben im Inkontaktbringen der Wafer miteinander, die geätzte(n) Seite(n) nach innen gewandt, besteht, wobei die so gebildete Anordnung anschließend eine Wärmebehandlung bei einer Temperatur von 200 bis 300 °C und während einer Dauer von 2 bis 4 Stunden in einem System unter Presse und bevorzugt unter Primärvakuum durchläuft.

15. Verfahren nach einem der Ansprüche 9 bis 14, wobei das Anbringen aus Schritt 2) nach dem Spark Plasma Sintering- (SPS-) oder Field Activated Sintering Technique- (FAST-) Verfahren ausgeführt wird.

16. Verwendung eines Mikroreaktors nach einem der Ansprüche 1 bis 7 für den Einsatz von Hochdruck- und/oder Hochtemperaturfluiden, chemisch aggressiven Fluiden, überkritischen Fluiden im Bereich der Synthesechemie, Thermo-Hydrogeologie, Geochemie, Mikrobiologie unter Extrembedingungen, bevorzugt bei Temperaturen von kleiner oder gleich 500 °C und/oder Drücken von kleiner oder gleich 500 Bar.

## Claims

1. Microreactor consisting essentially of sapphire, made of transparent sapphire, preferably in the wavelength range from 150 to 6500 nm, wherein the sapphire is mono-crystalline or polycrystalline, preferably mono-crystalline such that the c-plane is perpendicular to the microreactor surface.

2. Microreactor according to claim 1 , comprising a first wafer (1), a second wafer (2), at least one of said wafers comprising at least one micro-channel (3).

3. Microreactor according to claim 1 or 2, wherein the micro-channel (3) has an average depth H ranging from 0.1 to 500 µm.

4. Microreactor according to claim 3 , wherein the micro-channel (3) has an average width W ranging from 0.1 to 1000 µm.

5. Microreactor according to any one of claims 2 to 4, wherein the ratio of wafer (2) thickness / micro-channel (3) depth is greater than or equal to 2, preferably greater than or equal to 4.

6. Microreactor according to claim 4 or 5, wherein the total surface area of the at least one micro-channel, is less than or equal to half of the total wafer surface area, and preferably the minimum distance Z between two micro-channels, or between two parts of the same micro-channel is greater than or equal to W and is preferably greater than 2*W.

7. Microreactor according to any one of the preceding claims, having a volume of less than 500 µl, preferably ranging from 0.5 to 500 µl.

8. Use of sapphire for the manufacture of a microreactor according to any one of the preceding claims, wherein the sapphire is mono-crystalline or polycrystalline.

9. Process of manufacturing a sapphire microreactor according to any of claims 1 to 7 comprising the steps:
1) etching at least one micro-channel on at least one wafer, preferably by photolithography method followed by chemical or plasma etching, or by direct laser writing method or machining,
2) assembling the etched wafer obtained in step 1) on a second etched or unetched wafer.

10. Process according to the preceding claim, wherein the etching step 1) comprises the substeps:
(a) printing an image of interest, by means of a resin, on at least one wafer, said wafer being covered by a layer of sacrificial material,
(b) chemical etching of the layer of sacrificial material present on the wafer,
(c) removing the residual resin layer,
(d) chemical etching of the micro-channels according to the desired final depth.

11. Process according to any one of claims 9 to 10, further comprising a step of drilling the inlet and/or outlet ports of the wafer(s).

12. Process according to any one of claims 9 to 11, wherein the assembly of step 2) comprises a pre-bonding step, said pre-bonding step preferably comprising at least one wafer cleaning step followed by pre-bonding in aqueous solution and then heat treatment in a press system and preferably under primary vacuum.

13. Process according to the preceding claim, in which the cleaning is carried out by means of a solution of sulphuric acid (H₂SO₄) and hydrogen peroxide (H₂O₂), (4:1, v/v), preferably followed by a rinsing with ultra-pure water at a temperature higher than or equal to 60°C and a treatment in a phosphoric acid crystallizer at a temperature higher than or equal to 150°C.

14. Process according to claim 12 or 13, wherein the pre-bonding consists of bringing the wafers into contact with each other, with the etched side(s) on the inside, the set thus constituted is then heat treated at a temperature ranging from 200 to 300°C and for a time ranging from 2 to 4 hours in a press system and preferably under a primary vacuum.

15. Process according to any one of claims 9 to 14, wherein the assembly of step 2) is performed by the Spark Plasma Sintering (SPS) or Field Activated Sintering Technique (FAST) method.

16. Use of a microreactor according to any one of claims 1 to 7 for the implementation of high-pressure and/or high-temperature fluids, chemically aggressive fluids, supercritical fluids in the field of synthetic chemistry, thermo-hydrogeology, geochemistry, microbiology under extreme conditions, preferably at temperatures less than or equal to 500°C and/or pressures less than or equal to 500 bar.
